# EUROPEAN PATENT APPLICATION

(11) **EP 4 699 678 A2**
(43) Date of publication of application: **25.02.2026**
(21) Application number: 25196026.6
(22) Date of filing: 14.08.2025
(51) Int. Cl.: A63J 5/02, A63H 33/28

(54) **SMOKE-FILLED BUBBLE MACHINE AND CONSTANT-TEMPERATURE CONTROL CIRCUIT**

(30) Priority: 21.08.2024 CN 202411157478
(71) Applicant: Shenzhen Qiaohua Industries Limited, Shenzhen Guangdong 518000 (CN)
(72) Inventor: YANG, RUIMIAN, GUANGDONG, 518000 (CN); CHEN, RUIBAO, GUANGDONG, 518000 (CN)
(74) Representative: Metida

(57) **Abstract**

A smoke-filled bubble machine (100) and a constant-temperature control circuit (300) are disclosed. Firstly, a heating member (170) is heated at a full-speed to make the heating member (170) heat up rapidly. When a temperature of the heating member (170) rises above a first predetermined threshold, a loop switch is alternately turned on and turned off, and a turned-on duration is iteratively adjusted, so as to enable the heating member (170) to heat up stably to near an optimal temperature value. Finally, the temperature of the heating member (170) is kept as close to the optimal temperature value as possible according to a predetermined PWM signal. In this way, high-quality bubbles can be generated.

## Description

### FIELD

The present disclosure relates to the technical field of smoke fluid atomization, and particularly, to a smoke-filled bubble machine and a constant-temperature control circuit.

### BACKGROUND

A smoke-filled bubble machine is a machine used to generate bubbles. A Chinese utility model patent with the publication number CN211987109U discloses a bubble machine, which is designed in a shape of a pistol and can be used for daily entertainment.

The smoke-filled bubble machine heats smoke fluid, atomizes the smoke fluid to form smoke, and then blows out the smoke to form bubbles. When the smoke fluid in the smoke-filled bubble machine is heated, it is necessary to keep a temperature of the smoke fluid constant near an optimal temperature value in order to achieve a better smoke fluid atomization effect. Therefore, the present disclosure provides a heating control strategy to keep the temperature of the smoke fluid constant near the optimal temperature value during heating.

### BRIEF DESCRIPTION OF THE DRAWINGS

FIG. 1 is a block diagram of a configuration of a smoke-filled bubble machine according to an embodiment of the present disclosure.
FIG. 2 is a circuit diagram of the smoke-filled bubble machine according to an embodiment of the present disclosure.
FIG. 3 is a circuit diagram of the smoke-filled bubble machine according to an embodiment of the present disclosure.
FIG. 4 is a circuit diagram of the smoke-filled bubble machine according to an embodiment of the present disclosure.
FIG. 5 is a circuit diagram of the smoke-filled bubble machine according to an embodiment of the present disclosure.
FIG. 6 is a flow diagram of operations executed by a processor of the smoke-filled bubble machine according to an embodiment of the present disclosure.
FIG. 7 is a flow diagram of operations executed by the processor of the smoke-filled bubble machine according to an embodiment of the present disclosure.
FIG. 8 is a flow diagram of operations executed by the processor of the smoke-filled bubble machine according to an embodiment of the present disclosure.
FIG. 9 is a circuit diagram of the smoke-filled bubble machine according to an embodiment of the present disclosure.
FIG. 10 is a flow diagram of operations executed by the processor of the smoke-filled bubble machine according to an embodiment of the present disclosure.
FIG. 11 is a flow diagram of operations executed by the processor of the smoke-filled bubble machine according to an embodiment of the present disclosure.
FIG. 12 is a block diagram of a configuration of a constant-temperature control circuit according to an embodiment of the present disclosure.
FIG. 13 is a block diagram of a configuration of the constant-temperature control circuit according to an embodiment of the present disclosure.
FIG. 14 is a block diagram of a configuration of the constant-temperature control circuit according to an embodiment of the present disclosure.
FIG. 15 is a block diagram of a configuration of the constant-temperature control circuit according to an embodiment of the present disclosure.
FIG. 16 is a flow diagram of operations executed by a main control circuit of the constant-temperature control circuit according to an embodiment of the present disclosure.
FIG. 17 is a flow diagram of operations executed by the main control circuit of the constant-temperature control circuit according to an embodiment of the present disclosure.

### DETAILED DESCRIPTION

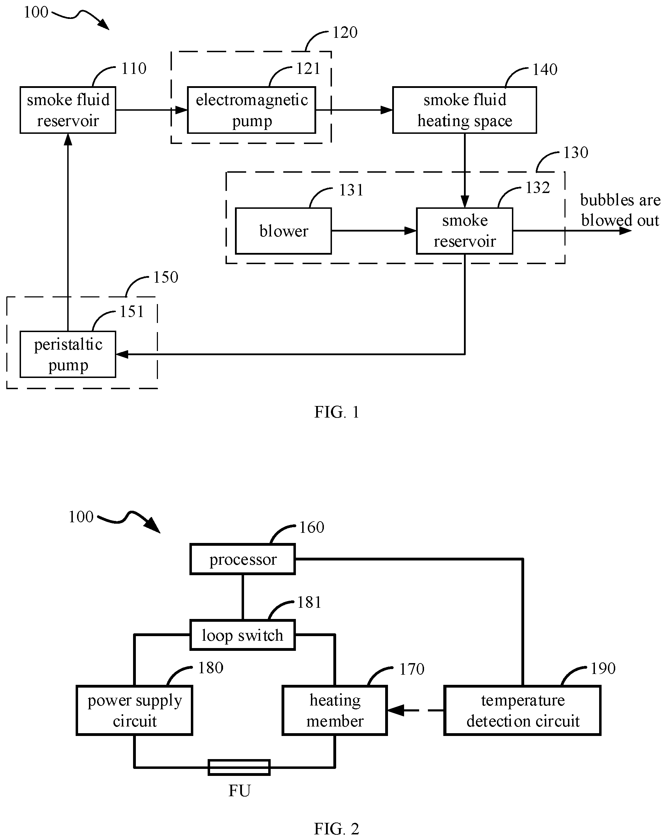

As shown in FIG. 1, a smoke-filled bubble machine 100 includes a smoke fluid reservoir 110, a fluid delivery system 120, a smoke delivery system 130, and a smoke fluid heating space 140.

The fluid delivery system 120 is communicated with the smoke fluid reservoir 110 and the smoke fluid heating space 140, and is configured to deliver smoke fluid from the smoke fluid reservoir 110 to the smoke fluid heating space 140. The smoke-filled bubble machine 100 controls heating of the smoke fluid in the smoke fluid heating space 140, so that the smoke fluid is constantly kept near an optimal temperature value, achieving a better atomization effect. The smoke delivery system 130 is communicated to the smoke fluid heating space 140 and is configured to blow out bubbles generated in the smoke fluid heating space 140.

The fluid delivery system 120 includes an electromagnetic pump 121. The delivery of the smoke fluid is completed by the electromagnetic pump 121. The smoke delivery system 130 includes a blower 131 and a smoke reservoir 132. The smoke reservoir 132 is communicated with the smoke fluid heating space 140 and is configured to collect the bubbles output from the smoke fluid heating space 140. An air duct of the blower 131 is communicated with the smoke reservoir 132 and is configured to blow the bubbles collected in the smoke reservoir 132 out of the smoke reservoir 132.

As shown in FIG. 1, the smoke-filled bubble machine 100 also includes a fluid recycling system 150. The fluid recycling system 150 is communicated with a bottom of the smoke reservoir 132 and the smoke fluid reservoir 110, and is configured to recycle the smoke fluid accumulated at the bottom of the smoke reservoir 132 back to the smoke fluid reservoir 110. Since heating takes time, when the smoke-filled bubble machine 100 is just started, some smoke fluid may not be atomized, thus accumulate at the bottom of the smoke reservoir 132. In addition, when the atomized smoke fluid is delivered to the smoke reservoir 132, due to a condensation effect, a small part of the atomized smoke fluid may be liquefied and accumulate at the bottom of the smoke reservoir 132. The fluid recycling system 150 includes a peristaltic pump 151. The recycling of the smoke fluid is completed by the peristaltic pump 151.

As shown in FIGS. 2-4, the smoke-filled bubble machine 100 further includes a processor 160, a heating member 170, a power supply circuit 180, and a temperature detection circuit 190.

The power supply circuit 180 is configured to supply power to the heating member 170. When the power supply circuit 180 supplies power to the heating member 170, the heating member 170 converts electrical energy into thermal energy, thereby heating the smoke fluid to atomize the smoke fluid. It can be understood that a temperature of the heating member 170 is affected by a power-on duration, working power, etc. But usually, the working power is usually set as a rated power of the heating member 170 or other reasonable power. Therefore, a control of the temperature of the heating member 170 is usually achieved by controlling the power-on duration, and this is also the case in the embodiments of the present disclosure. The heating member 170 may be arranged in the smoke fluid heating space 140.

A rated voltage range of the power supply circuit 180 may be 100 V-240 V. Exemplarily, the rated voltage of the power supply circuit 180 may be 220 V and a rated frequency may be 50 Hz. Exemplarily, the rated voltage of the power supply circuit 180 may be 120 V and the rated frequency can be 60 Hz.

The power supply circuit 180 is arranged with a loop switch 181 electrically connected to the processor 160. The loop switch 181 may be turned on and turned off under a control of the processor 160. When the loop switch 181 is turned on, the power supply circuit 180 can supply power to the heating member 170. Conversely, when the loop switch 181 is turned off, the power supply circuit 180 cannot supply power to the heating member 170. Therefore, it can be understood that by controlling the loop switch 181 to be turned on and turned off, the power-on duration of the heating member 170 can be controlled. In other words, a heating duration of the heating member 170 can be controlled.

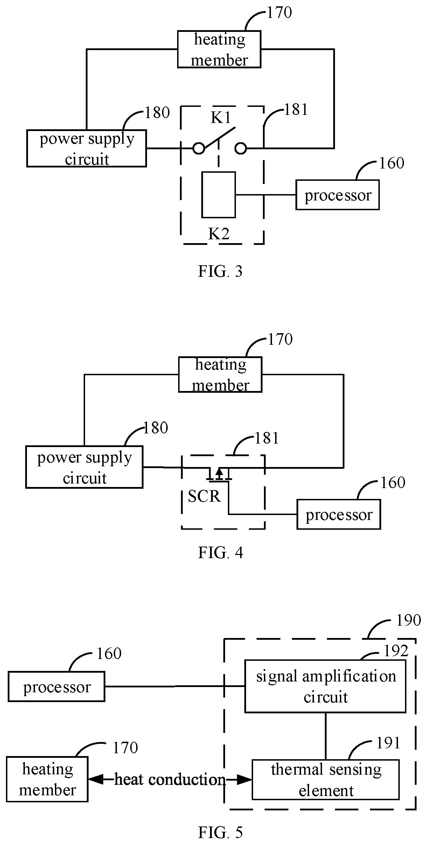

As shown in FIG. 3, the power supply circuit 180 may be an AC power source, and the loop switch 181 may be a switch contact K1 of a relay. A control coil K2 corresponding to the switch contact K1 is connected to the processor 160. In an embodiment, the switch contact K1 may be a normally-open contact. In this way, the processor 160 can supply power to the control coil K2, thereby enabling the switch contact K1 to be turned on, and further enabling the power supply circuit 180 to supply power to the heating member 170. Conversely, the processor 160 can stop supplying power to the control coil K2, thereby enabling the switch contact K1 to be turned off, and further enabling the power supply circuit 180 to stop supplying power to the heating member 170. In another embodiment, the switch contact K1 may be a normally-closed contact, and a control logic of the normally-closed contact is opposite to that of the normally-open contact. For another example, as shown in FIG. 4, the loop switch 181 may be a silicon-controlled rectifier (also known as thyristor). An anode and cathode of the SCR are connected in series in a power supply loop of the heating member 170. A control electrode of the SCR is connected to the processor 160. In this way, the processor 160 can send a corresponding conduction signal to the control electrode, thereby enabling the SCR to be turned on (in other words, enabling the anode and cathode to conduct), enabling the power supply circuit 180 to supply power to the heating member 170. Conversely, if the processor 160 stops controlling the control electrode, the SCR may be turned off, and the power supply circuit 180 may not supply power to the heating member 170.

As shown in FIG. 2, the power supply circuit 180 may further be arranged with at least one fuse element FU. The at least one fuse element FU is configured to protect electronic components. For example, in a case of a short-circuit, the at least one fuse element may blow to protect the electronic components such as the heating member 170 and the loop switch 181.

The temperature detection circuit 190 is electrically connected to the processor 160 and is configured to detect the temperature of the heating member 170. It can be understood that when the temperature detection circuit 190 detects the temperature of the heating member 170, a temperature electrical signal may be generated. Therefore, the processor 160 is configured to obtain the temperature electrical signal from the temperature detection circuit 190 and can determine the temperature of the heating member 170 according to the temperature electrical signal. It should be noted that a surface of the heating member 170 is in contact with the smoke fluid and heats the smoke fluid by heat exchange. Therefore, in the embodiments of the present disclosure, the detection of the temperature of the heating member 170 refers to a detection of a surface temperature of the heating member 170.

As shown in FIG. 5, the temperature detection circuit 190 may include a thermal sensing element 191 and a signal amplification circuit 192. The thermal sensing element 191 has a heat conduction relationship with the heating member 170. In other words, the temperature of the heating member 170 affects the thermal sensing element 191, enabling the thermal sensing element 191 to generate a temperature electrical signal according to the temperature of the heating member 170. The signal amplification circuit 192 is electrically connected between the thermal sensing element 191 and the processor 160 and is configured to amplify the temperature electrical signal generated by the thermal sensing element 191 and send the amplified temperature electrical signal to the processor 160 to improve reliability, for example, to improve resistance to interference caused by high-temperature environment.

The thermal sensing element 191 may include a thermistor. A resistance value of the thermistor may change with a change of the temperature of the heating member 170. Based on this characteristic of the thermistor, existing technical means can be used to output the temperature electrical signal corresponding to the temperature of the heating member 170. Exemplarily, the thermistor may be a negative temperature coefficient thermistor. The negative temperature coefficient thermistor may be attached to the surface of the heating member 170. In this way, a resistance value of the negative temperature coefficient thermistor may decrease as the temperature of the heating member 170 increases. The negative temperature coefficient thermistor may be connected in series with a fixed resistor in a constant-voltage source. In this way, the temperature of the heating member 170 may affect the resistance value of the negative temperature coefficient thermistor, and the resistance value of the negative temperature coefficient thermistor may affect a voltage-dividing ability of the negative temperature coefficient thermistor. Therefore, voltage across the negative temperature coefficient thermistor can be used as the temperature electrical signal.

The thermal sensing element 191 may include a thermocouple. The thermocouple is a temperature sensor and can be attached to the surface of the heating member 170 to directly detect the temperature of the heating member 170 and output a corresponding temperature electrical signal.

The thermal sensing element 191 may include a thermistor and a thermocouple. Each of the thermistor and the thermocouple can output a respective temperature electrical signal to the processor 160. In other words, the temperature detection circuit 190 may send two temperature electrical signals to the processor 160. One of the two temperature electrical signals is generated by the thermistor, and the other of the two temperature electrical signals is generated by the thermocouple. The processor 160 is further configured to determine the temperature of the heating member 170 according to the two temperature electrical signals.

The processor 160 may determine two temperature values based on the two temperature electrical signals. Particularly, the two temperature values are in a one-to-one correspondence with the two temperature electrical signals. Then, the processor 160 may obtain a calculated result by multiplying two predetermined weights with the two temperature values in a one-to-one correspondence. The calculated result can be used as the temperature of the heating member 170. A sum of the two predetermined weights equals one. One of the two predetermined weights may be set according to an accuracy of the thermistor, and the other of the two predetermined weights may be set according to an accuracy of the thermocouple. Specifically, one of the two predetermined weights is positively correlated to the accuracy of the thermistor in temperature detection and the other of the two predetermined weights is positively correlated to the accuracy of the thermocouple in temperature detection. In this way, the temperature value obtained by the two temperature electrical signals is more accurate. For example, in an application scenario, the accuracy of the thermocouple is higher than that of the thermistor, one of the two predetermined weights corresponding to the thermocouple can be set as 0.7, and the other of the two predetermined weights corresponding to the thermistor can be set as 0.3. The processor 160 can determine a T1, for example, 190°C, according to a temperature electrical signal generated by the thermistor, and additionally can determine a T2, for example, 200°C, according to a temperature electrical signal generated by the thermocouple. In this way, combined with the two predetermined weights, the temperature of the heating member 170 can be determined. For example, with the above-mentioned parameters, the temperature of the heating member 170 is determined to be 197°C.

The processor 160 may include an MCU and other execution elements for executing a method required in the embodiments of the present disclosure. Before describing the method executed by the processor 160, it should be noted first that there is a hysteresis in heat transfer of the heating member 170. This is because usually, the heating member 170 includes a heated body and a heating source wrapped inside the heated body. The heating source is connected to the power supply circuit 180 and generates heat under a power supply of the power supply circuit 180. Therefore, it takes a certain amount of time for the heat to be transferred from the heating source to a surface of the heated body, resulting in a certain hysteresis. For example, ignoring other factors, the power supply circuit 180 supplies power to the heating source from time t₁ to time t₂. At this time, it is assumed that a temperature of the surface of the heated body (that is, the surface of the heating member 170) detected at time t₂ is 100°C, then after the power supply is stopped at time t₂, due to continuous heat transfer, the temperature of the surface of the heated body detected at time t₃ is 120°C.

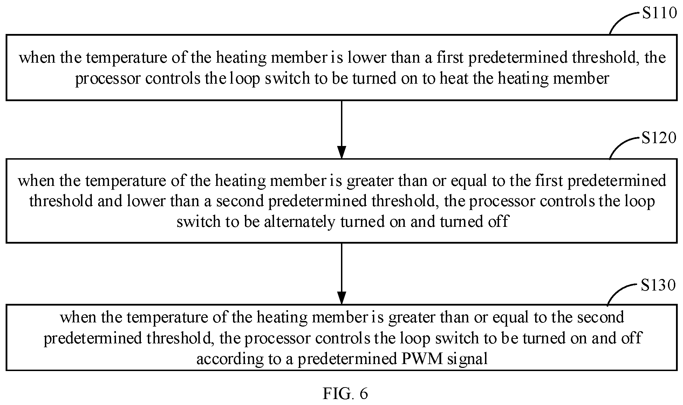

As shown in FIG. 6, the processor 160 is configured to execute the following operations of S110 to S130.

In the operation S110, when the temperature of the heating member 170 is lower than a first predetermined threshold M1, the processor 160 controls the loop switch 181 to be turned on to heat the heating member 170.

The operation S110 is a full-speed heating stage. For example, at a startup stage of the smoke-filled bubble machine 100, the temperature of the heating member 170 is far lower than the optimal temperature value when the smoke fluid is burning. Therefore, in order to shorten a heating duration, the processor 160 can control the loop switch 181 to be turned on. In this way, the power supply circuit 180 can continuously supply power to the heating member 170 for full-speed heating. It can be understood that the temperature of the heating member 170 rises relatively fast at this stage. If the full-speed heating of the heating member 170 is stopped when the temperature of the heating member 170 reaches near the optimal temperature value (that is, M2 hereinafter), due to the hysteresis of the heating member 170 in heat conduction, the temperature of the surface of the heating member 170 may be significantly higher than the optimal temperature value, resulting in poor bubble quality. Therefore, in the embodiments of the present disclosure, M1 is predetermined for a control of the full-speed heating stage. A value of M1 can be reasonably set according to the optimal temperature value. For example, if the optimal temperature value is 200°C, the value of M1 can be set to be 180. In this way, at the full-speed heating stage, if the temperature of the surface of the heating member 170 exceeds M1, the full-speed heating can be stopped and the processor 160 may execute the operation S120. It can be understood that since M1 is significantly smaller than the optimal temperature value, the temperature of the surface of the heating member 170 may not be significantly greater than the optimal temperature value. Exemplarily, at this stage, the fluid delivery system 120 may not deliver the smoke fluid or may deliver a small amount of smoke fluid for heating.

In the operation S120, when the temperature of the heating member 170 is greater than or equal to the first predetermined threshold M1 and lower than a second predetermined threshold M2, the processor 160 controls the loop switch 181 to be alternately turned on and turned off. A turned-on duration of the loop switch 181 each time may be adjusted according to a temperature change of the heating member 170 during a last time when the loop switch 181 was turned off.

The operation S120 is a temperature-adjustment stage. A purpose of the operation S120 is to steadily increase the temperature of the heating member 170 to near the optimal temperature value. Exemplarily, at this stage, the fluid delivery system 120 can normally deliver the smoke fluid for heating. The heat exchange between the heating member 170 and the smoke fluid and the hysteresis of the heating member 170 in heat conduction are both uncertain factors. In order to achieve the purpose of this stage, the processor 160 can control the loop switch 181 to be alternately turned on and turned off. In other words, cyclically control the loop switch 181 to be turned on and turned off until the purpose of this stage is achieved. Particularly, the turned-on duration of the loop switch 181 each time is adjusted according to the temperature change of the heating member 170 during a last time when the loop switch 181 was turned off. Specifically, during one control of the loop switch 181, the loop switch 181 is first turned on and then turned off. During a turned-on period, due to the two factors mentioned above, the temperature of the surface of the heating member 170 may decrease, may increase, etc. Therefore, the turned-on duration of the loop switch 181 can be adjusted according to the temperature change of the heating member 170 during the turned-on period of the loop switch 181, that is, the heating duration of the heating member 170 can be adjusted. It can be understood that an adjustment of the turned-on duration of the loop switch 181 after the loop switch 181 being turned off is like this. In other words, a heating cycle of the heating member 170 is adjusted according to the temperature change of the heating member 170 each time. Exemplarily, in a certain control in the operation S120, the processor 160 controls the loop switch 181 to be turned on. The temperature change of the heating member 170 during the turned-on period is an increase, then the turned-on duration can be adjusted according to an amplitude of the increase. If the temperature change of the heating member 170 during the last time when the loop switch 181 was turned on is a decrease, then the turned on duration can be adjusted according to an amplitude of the decrease. Therefore, through an iterative adjustment of the heating duration of the heating member 170, the temperature of the heating member 170 can be steadily increased to near the optimal temperature value. Exemplarily, a turned-off duration of the switch loop 181 in the operation S120 each time can be a predetermined fixed value, for example, 2 s.

Near the optimal temperature value can be represented by the second predetermined threshold M2. In other words, M2 is close to the optimal temperature value when the smoke fluid is burning. For example, M2 is greater than or equal to the optimal temperature value minus 3 and less than or equal to the optimal temperature value plus 3. For another example, M2 is greater than or equal to the optimal temperature value minus 5 and less than or equal to the optimal temperature value plus 5. The value of M2 can be reasonably set as long as those skilled in the art can clearly determine that the predetermined threshold M2 is close to the optimal temperature value. For example, if the optimal temperature value is 200°C, M2 can be any integer from 195 to 205 or another reasonable value.

In the operation S130, when the temperature of the heating member 170 is greater than or equal to the second predetermined threshold M2, the processor 160 controls the loop switch 181 to be turned on and off according to a predetermined PWM signal.

The operation S130 is a constant-temperature stage. In the operation S130, the temperature of the heating member 170 is kept as close as possible to the optimal temperature value. In this way, the generated bubbles have higher quality. Then the loop switch 181 can be controlled according to the predetermined PWM signal. For example, the loop switch 181 can be periodically and alternately turned on for 0.5 s and turned off for 2 s. In other words, the heating member 170 is periodically heated for 0.5 s and stops being heated for 2 s. Of course, other reasonable PWM signals can also be used in this operation.

In the embodiments of the present disclosure, the full-speed heating is carried out first to enable the heating member 170 to heat up quickly. When the temperature of the heating member 170 rises above the first predetermined threshold M1, the loop switch 181 is alternately controlled to be turned on and turned off, and the turned-on duration is iteratively adjusted to enable the heating member 170 to heat up steadily to near the optimal temperature value. Finally, a predetermined PWM signal is used to keep the temperature of the heating member 170 as close as possible to the optimal temperature value. Therefore, a heating control strategy provided in the embodiments of the present disclosure can enable the temperature of the smoke fluid heating to be constantly kept near the optimal temperature value, thereby enabling the smoke-filled bubble machine 100 to generate high-quality bubbles.

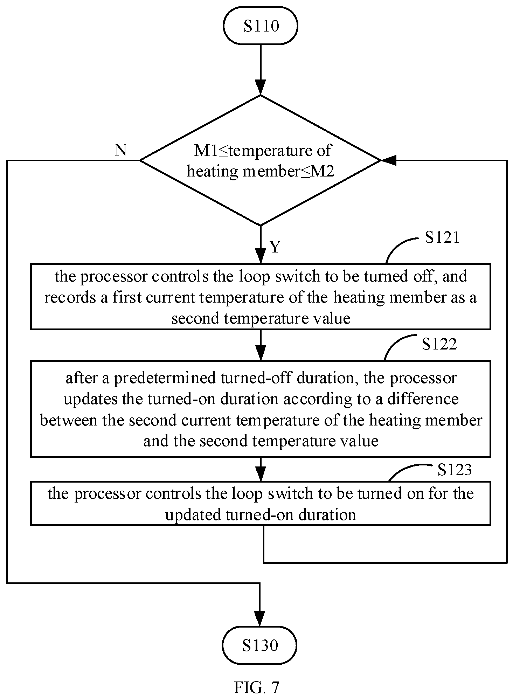

As shown in FIG. 7, when the processor 160 controls the loop switch 181 to be alternately turned on and turned off in the operation S120, the processor 160 cyclically executes the following operations S121 to S123 until the temperature of the heating member 170 is greater than or equal to the second predetermined threshold M2.

**In** the operation S121, the processor 160 controls the loop switch 181 to be turned off, and records a first current temperature of the heating member 170 as a second temperature value. In other words, at the moment when the processor 160 controls the loop switch 181 to be turned off, the processor 160 can save the first current temperature of the heating member 170.

In the operation S122, after a predetermined turned-off duration, the processor 160 updates the turned-on duration according to a difference between the second current temperature of the heating member 170 and the second temperature value. For example, the turned-off duration of the loop switch 181 can be predetermined, for instance, 2 s. In other words, 2 s after the operation S121, the turned-on duration is updated according to the difference between the second current temperature of the heating member 170 and the second temperature value.

In the operation S122, during the processor 160 updating the turned-on duration according to the difference between the second current temperature of the heating member 170 and the second temperature value, when the second current temperature of the heating member 170 is greater than or equal to the second temperature value, the turned-on duration is updated to a first predetermined value; and when the second current temperature of the heating member 170 is less than the second temperature value, then the turned-on duration is determined and updated according to the difference between the second temperature value and the second current temperature of the heating member 170. It should be noted that the difference between the second temperature value and the second current temperature of the heating member 170 is positively correlated with the turned-on duration.

In one aspect, when the second current temperature of the heating member 170 is greater than or equal to the second temperature value, it indicates that the temperature change of the heating member 170 is a temperature rise, and then the turned-on duration can be updated to the first predetermined value, for example, the turned-on duration can be updated to 3 s to keep the heating member 170 rising steadily. In another aspect, when the second current temperature of the heating member 170 is less than the second temperature value, it indicates that the temperature change of the heating member 170 is a temperature drop, and then a degree of temperature drop can be determined according to the difference between the second temperature value and the second current temperature of the heating member 170, and then the turned-on duration is determined and updated according to the degree of temperature drop. Specifically, the larger the difference (i.e., the degree of temperature drop), the larger the determined turned-on duration. That is, a heating duration of the heating member 170 is reasonably increased to make the heating member 170 heat up.

During the processor 160 determining the turned-on duration according to the difference between the second current temperature of the heating member 170 and the second temperature value and updating the turned-on duration, the processor 160 obtains a heating duration relationship, which has a plurality of numerical intervals non-overlapping with each other, and each of the plurality of numerical intervals corresponds to a heating duration value. The processor 160 updates the turned-on duration to a heating duration value corresponding to a target numerical interval among the plurality of numerical intervals, and the target numerical interval is a numerical interval into which the difference between the second current temperature of the heating member 170 and the second temperature value falls.

When the second current temperature of the heating member 170 is greater than or equal to the second temperature value, the turned-on duration is 3 s. The heating duration relationship may be shown in the following table. For example, in a process of controlling the switch circuit 181 to be turned on and turned off, the switch circuit 181 is first controlled to be turned on, and the first current temperature of the heating member 170 is recorded as the second temperature value, for example, 185°C. 2 s later, it is assumed that the second current temperature of the heating member 170 is 186°C, then the turned-on duration can be updated to 3 s. In a next process of controlling the switch circuit 181 to be turned on and turned off, the switch circuit 181 is first controlled to be turned off, and the first current temperature of the heating member 170 is recorded as the second temperature value, for example, 189°C; and 2 s later, it is assumed that the second current temperature of the heating member 170 is 188°C, then the difference between the second current temperature of the heating member 170 and the second temperature value can be determined to be 1, which falls into the target numerical interval [1, 2), and then the turned-on duration can be updated to 6 s.

**Table 1 heating duration relationship**

| numerical interval | turned-on duration |
|---|---|
| [0, 1) | 4 s |
| [1, 2) | 6 s |
| [2, 3) | 10 s |
| [4, +∞) | 20 s |

In the operation S123, the processor 160 controls the loop switch 181 to be turned on for the updated turned-on duration. In other words, after the predetermined turned-off duration, the processor 160 can control the loop switch 181 to be turned on to heat the heating member 170. The turned-on duration is the updated turned-on duration in the operation S122. It can be understood that through iteratively adjusting the turned-on duration, the temperature of the heating member 170 can be steadily increased to near the optimal temperature value, and then the processor 160 executes the operation S130.

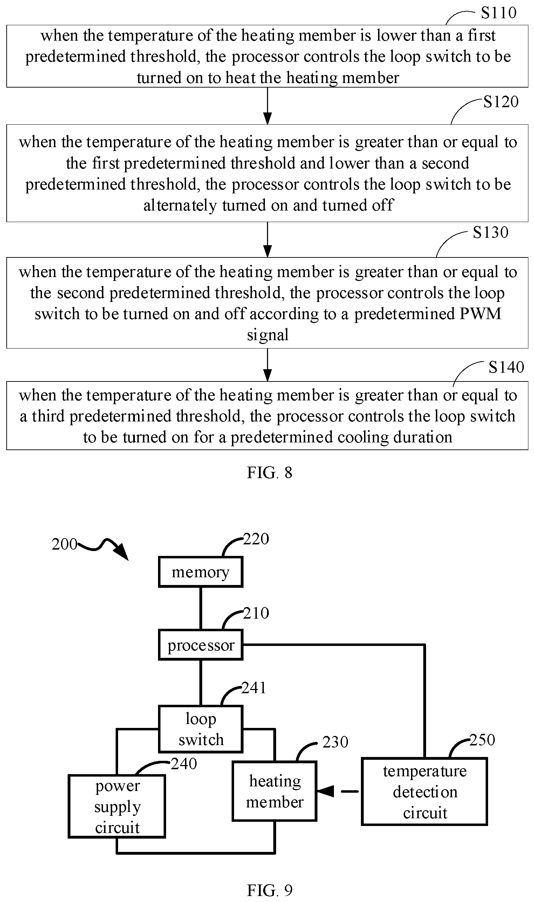

As shown in FIG. 8, the processor 160 can also be configured to execute the following operation S140.

In the operation S140, when the temperature of the heating member 170 is greater than or equal to a third predetermined threshold M3, the processor 160 controls the loop switch 181 to be turned on for a predetermined cooling duration.

In the operation S130, the loop switch 181 is controlled to be turned on and turned off according to the predetermined PWM signal, and thus the temperature change of the heating member 170 is very gentle. However, it is also possible that the temperature of the heating member 170 rises to an upper limit value, and the quality of the bubbles may be affected when the temperature of the heating member 170 exceeds the upper limit value. In an embodiment of the present disclosure, the third predetermined threshold M3 represents the upper limit value. Obviously, M3 is greater than M2 which represents near the optimal temperature value. For example, it is assumed that the optimal temperature value is 200°C, M3 can be set to 210. Therefore, when the temperature of the heating member 170 is greater than or equal to M3, the heating member 170 needs to be cooled down, thus the loop switch 181 is controlled to be turned off. For example, a turned-off duration of the loop switch 181 may be reasonably predetermined, such as 10 s, 15 s, 20 s, etc. It can be understood that after the predetermined cooling duration, an operation to be executed can be determined according to a temperature of the heating member 170 detected after the predetermined cooling duration.

As shown in FIG. 9, a smoke-filled bubble machine 200 may include a processor 210, a memory 220, a heating member 230, a power supply circuit 240, and a temperature detection circuit 250. The power supply circuit 240 is arranged with a loop switch 241.

The memory 220 stores an executable program for achieving the technical purpose of the present disclosure. The memory 220 is electrically connected to the processor 210, and the processor 210 can execute the executable program. The implementation of the processor 210, the heating member 230, the power supply circuit 240, the temperature detection circuit 250, and the loop switch 241 refers to the implementation of the constant-temperature control of the smoke-filled bubble machine 100 described above.

The processor 210 is configured to obtain a temperature electrical signal from the temperature detection circuit 250, and can determine a temperature of the heating member 230 according to the temperature electrical signal. Moreover, the processor 210 determines a relationship between the temperature of the heating member 230 and a first predetermined threshold M1 and a relationship between the temperature of the heating member and a second predetermined threshold M2. The first predetermined threshold M1 is less than the second predetermined threshold M2, and the second predetermined threshold M2 is close to an optimal temperature value when the smoke fluid is burning.

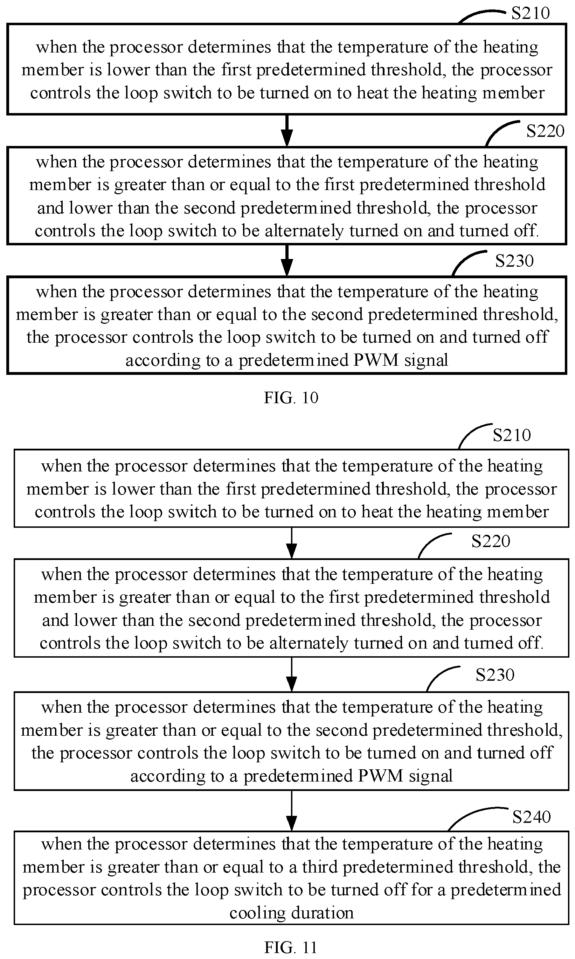

When the processor 210 reads the executable program stored in the memory 220, as shown in FIG. 10, the following operations S210 to S230 are executed.

In the operation S210, when the processor 210 determines that the temperature of the heating member 230 is lower than the first predetermined threshold M1, the processor 210 controls the loop switch 241 to be turned on to heat the heating member 230.

The operation S210 is a full-speed heating stage, and related specific implementation refers to the operation S110.

In the operation S220, when the processor 210 determines that the temperature of the heating member 230 is greater than or equal to the first predetermined threshold M1 and lower than the second predetermined threshold M2, the processor 210 controls the loop switch 241 to be alternately turned on and turned off. The processor 210 adjusts a turned-on duration of the loop switch 241 each time according to a temperature change of the heating member 230 during a last time when the loop switch 241 was turned off.

The operation S220 is a temperature-adjustment stage, and related specific implementation refers to the operation S120.

In the operation S230, when the processor 210 determines that the temperature of the heating member 230 is greater than or equal to the second predetermined threshold M2, the processor 210 controls the loop switch 241 to be turned on and turned off according to a predetermined PWM signal.

The operation S230 is a constant-temperature stage, and related specific implementation refers to the operation S130.

The processor 210 controls the loop switch 241 to be turned on and turned off according to the predetermined PWM signal, i.e., the processor 210 cyclically executes the following operations S221 to S223 until the temperature of the heating member 230 is greater than or equal to the second predetermined threshold M2.

In the operation S221, the processor 210 controls the loop switch 241 to be turned off and records a first current temperature of the heating member 241 as the second temperature value.

In the operation S222, after a predetermined turned-off duration, the processor 210 determines a difference between a second current temperature of the heating member 230 and the second temperature value, and updates the turned-on duration.

The determination of the difference between the second current temperature of the heating member 230 and the second temperature value and the update of the turned-on duration by the processor 210 may include the following situations. When the processor 210 determines that the second current temperature of the heating member 230 is greater than or equal to the second temperature value, the turned-on duration is updated to a first predetermined value. When the processor 210 determines that the second current temperature of the heating member 230 is less than the second temperature value, the turned-on duration is determined and updated according to the difference between the second temperature value and the second current temperature of the heating member 230. The difference between the second temperature value and the second current temperature of the heating member 230 is positively correlated with the turned-on duration.

When the processor 210 determines the turned-on duration according to the difference between the second temperature value and the second current temperature of the heating member 230 and updates the turned-on duration, the processor 210 obtains a heating duration relationship, which has a plurality of numerical intervals non-overlapping with each other, and each of the plurality of numerical intervals corresponds to a heating duration value. The processor 210 updates the turned-on duration to a heating duration value corresponding to a target numerical interval among the plurality of numerical intervals, and the target numerical interval is a numerical interval among the plurality of numerical intervals into which the difference between the second temperature value and the second current temperature of the heating member 230 falls.

Related specific implementation of the above-mentioned technical features refers to the operation S122.

In the operation S223, the processor 210 controls the loop switch 241 to be turned on for the updated turned-on duration. Related specific implementation refers to the operation S123.

As shown in FIG. 11, the processor 210 can also execute the following operation S240.

In the operation S240, when the processor 210 determines that the temperature of the heating member 230 is greater than or equal to a third predetermined threshold M3, the processor 210 controls the loop switch 241 to be turned off for a predetermined cooling duration. For related specific implementation, please refer to the operation S140.

Similar to the previous embodiments, in this embodiment of the present disclosure, a full-speed heating is firstly carried out to make the heating member 230 heat up rapidly. When the temperature of the heating member 230 rises above the first predetermined threshold M1, the loop switch 241 is controlled to be alternately turned on and turned off and the turned-on duration is iteratively adjusted, so as to the heating member 230 rises steadily to near the optimal temperature value. Finally, the predetermined PWM signal is used to make the temperature of the heating member 230 as close as possible to near the optimal temperature value. Therefore, when the smoke fluid is heated, the temperature of the heating member 230 is constantly kept near the optimal temperature value. In this way, the smoke-filled bubble machine 200 can produce high-quality bubbles.

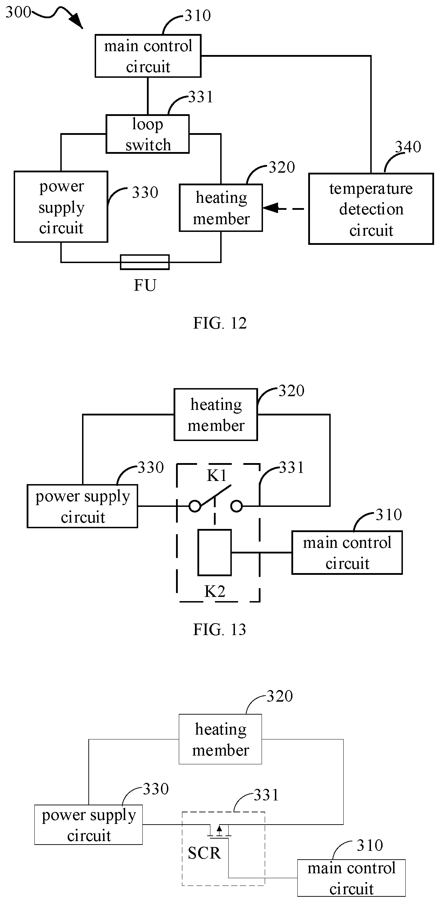

A constant-temperature control circuit 300 is provided in an embodiment of the present disclosure. As shown in FIG. 12, the constant-temperature control circuit 300 may include a main control circuit 310, a heating member 320, a power supply circuit 330, and a temperature detection circuit 340. The power supply circuit 330 is arranged with a loop switch 331 electrically connected to the main control circuit 310. The loop switch 331 can be turned on and turned off under the control of the main control circuit 310.

As shown in FIG. 13, the loop switch 331 may be a switch contact K1 of a relay. A control coil K2 corresponding to the switch contact K1 is electrically connected to the main control circuit 310. In some embodiments, as shown in FIG. 14, the loop switch 331 may also be a silicon-controlled rectifier (also known as a thyristor), and a control electrode of the SCR is connected to the main control circuit 310. In some embodiments, as shown in FIG. 12, the power supply circuit 330 may also be arranged with at least one fuse element FU.

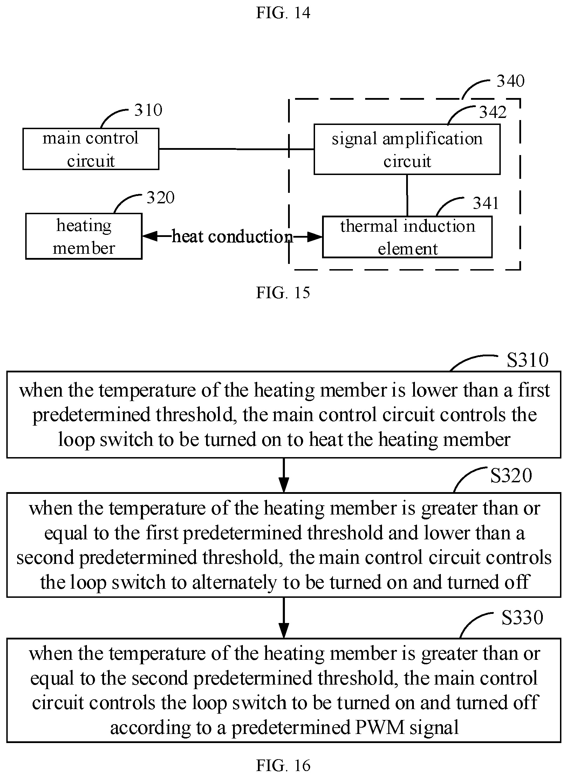

As shown in FIG. 15, the temperature detection circuit 340 may include a thermal induction element 341 and a signal amplification circuit 342. The thermal induction element 341 has a heat conduction relationship with the heating member 320. The thermal induction element 341 can generate a temperature electrical signal according to a temperature of the heating member 320. The signal amplification circuit 342 is electrically connected between the thermal induction element 341 and the main control circuit 310, and is configured to amplify the temperature electrical signal generated by the thermal induction element 341 and send the amplified temperature electrical signal to the main control circuit 310.

The thermal induction element 341 may include a thermistor or a thermocouple. Alternately, the thermal induction element 341 may include the thermistor and the thermocouple. The temperature detection circuit 340 sends two temperature electrical signals to the main control circuit 310. One of the two temperature electrical signals is generated by the thermistor, and the other of the two temperature electrical signals is generated by the thermocouple. Based on this, the main control circuit 310 is also configured to determine the temperature of the heating member 320 according to the two temperature electrical signals.

The main control circuit 310 can determine two temperature values according to the two temperature electrical signals. Particularly, the two temperature values are in a one-to-one correspondence with the two temperature electrical signals. Then the main control circuit 310 may obtain a calculated result by multiplying two predetermined weights with the two temperature values in a one-to-one correspondence. The calculated result can be used as the temperature of the heating member 320. A sum of the two predetermined weights equals one.

It should be noted that related implementation of the main control circuit 310 refers to the processor 160 of the smoke-filled bubble machine 100, and others refer to the implementation of the constant-temperature control of the smoke-filled bubble machine 100.

As shown in FIG. 16, the main control circuit 310 is configured to execute the following operations S310 to S330.

In the operation S310, when the temperature of the heating member 320 is lower than a first predetermined threshold M1, the main control circuit 310 controls the loop switch 331 to be turned on to heat the heating member 320.

The operation S310 is a full-speed heating stage. For related specific implementation, please refer to the operation S110.

In the operation S320, when the temperature of the heating member 320 is greater than or equal to the first predetermined threshold M1 and lower than a second predetermined threshold M2, the main control circuit 310 controls the loop switch 331 to alternately to be turned on and turned off. Particularly, a turned-on duration of the loop switch 331 each time is adjusted according to a temperature change of the heating member 320 during a last time when the loop switch 331 was turned off. The second predetermined threshold M2 is close to an optimal temperature value when the smoke fluid is burning.

The operation S320 is a temperature-adjustment stage. For related specific implementation, please refer to the operation S120.

In the operation S330, when the temperature of the heating member 320 is greater than or equal to the second predetermined threshold M2, the main control circuit 310 controls the loop switch 331 to be turned on and turned off according to a predetermined PWM signal.

The operation S330 is a constant-temperature stage. For related specific implementation, please refer to the operation S130.

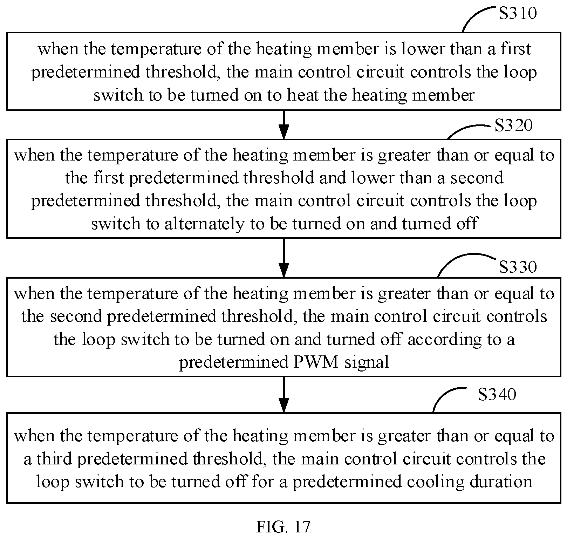

As shown in FIG. 17, the main control circuit 310 can further be configured to execute the following operation S340.

In the operation S340, when the temperature of the heating member 320 is greater than or equal to a third predetermined threshold M3, the main control circuit 310 controls the loop switch 331 to be turned off for a predetermined cooling duration. The third predetermined threshold M3 is greater than the second predetermined threshold M2. For related specific implementation, please refer to the operation 140.

## Claims

1. A smoke-filled bubble machine (100), comprising:
a processor (160);
a heating member (170), configured to heat smoke fluid flowing through the heating member (170);
a power supply circuit (180), configured to supply power to the heating member (170), and arranged with a loop switch (181) electrically connected to the processor (160), wherein the loop switch (181) is turned on and turned off under a control of the processor (160); and
a temperature detection circuit (190), electrically connected to the processor (160) and configured to detect a temperature of the heating member (170);
wherein the processor (160) is configured to obtain a temperature electrical signal from the temperature detection circuit (190) to determine the temperature of the heating member (170), and the temperature electrical signal is generated when the temperature detection circuit (190) detects the temperature of the heating member (170);
when the temperature of the heating member (170) is lower than a first predetermined threshold, the processor (160) controls the loop switch (181) to be turned on to heat the heating member (170);
when the temperature of the heating member (170) is greater than or equal to the first predetermined threshold and lower than a second predetermined threshold, the processor (160) controls the loop switch (181) to be alternately turned off and turned on; a turned-on duration of the loop switch (181) each time is adjusted according to a temperature change of the heating member (170) during a last time when the loop switch (181) was turned off; the second predetermined threshold is close to an optimal temperature value when the smoke fluid is burning;
when the temperature of the heating member (170) is greater than or equal to the second predetermined threshold, the processor (160) controls the loop switch (181) to be turned on and turned off according to a predetermined PWM signal.

2. The smoke-filled bubble machine (100) of claim 1, wherein the loop switch (181) is a switch contact (K1) of a relay or a silicon-controlled rectifier; a control coil corresponding to the switch contact (K1) is electrically connected to the processor (160), and a control electrode of the silicon-controlled rectifier is electrically connected to the processor (160); and/or
the power supply circuit (180) is further arranged with at least one fuse element (FU).

3. The smoke-filled bubble machine (100) of claim 1, wherein the temperature detection circuit (190) comprises a thermal sensing element (341) and a signal amplification circuit (342);
the thermal sensing element (341) has a heat conduction relationship with the heating member (170), and the thermal sensing element (341) is configured to generate a temperature electrical signal according to the temperature of the heating member (170);
the signal amplification circuit (342) is electrically connected between the thermal sensing element (341) and the processor (160) and is configured to amplify the temperature electrical signal generated by the thermal sensing element (341) and send the amplified temperature electrical signal to the processor (160).

4. The smoke-filled bubble machine (100) of claim 3, wherein the thermal sensing element (341) comprises at least one of a thermistor and a thermocouple;
when the thermal sensing element (341) comprises a thermistor and a thermocouple, the temperature detection circuit (190) sends two temperature electrical signals to the processor (160); one of the two temperature electrical signals is generated by the thermistor, and the other of the two temperature electrical signals is generated by the thermocouple;
the processor (160) is further configured to determine the temperature of the heating member (170) according to the two temperature electrical signals.

5. The smoke-filled bubble machine (100) of claim 4, wherein the processor (160) determines two temperature values according to the two temperature electrical signals; the two temperature values are in a one-to-one correspondence with the two temperature electrical signals;
the processor (160) obtains a calculated result by multiplying two predetermined weights with the two temperature values in a one-to-one correspondence, and takes the calculated result as the temperature of the heating member (170); a sum of the two predetermined weights is equal to one.

6. The smoke-filled bubble machine (100) of claim 1, wherein when the processor (160) controls the loop switch (181) to be alternately turned off and turned on, the processor (160) cyclically executes the following operations:
the processor (160) controls the loop switch (181) to be turned off and records a first current temperature of the heating member (170) as a second temperature value;
after a predetermined turned-off duration, the processor (160) updates the turned-on duration according to a difference between a second current temperature of the heating member (170) and the second temperature value; and
the processor (160) controls the loop switch (181) to be turned on for the updated turned-on duration.

7. The smoke-filled bubble machine (100) of claim 6, wherein when the second current temperature of the heating member (170) is greater than or equal to the second temperature value, the processor (160) updates the turned-on duration to a first predetermined value;
when the second current temperature of the heating member (170) is less than the second temperature value, the processor (160) determines the turned-on duration according to the difference between the second temperature value and the second current temperature of the heating member (170) and updates the turned-on duration; the difference between the second temperature value and the second current temperature of the heating member (170) is positively correlated with the turned-on duration.

8. The smoke-filled bubble machine (100) of claim 7, wherein when the processor (160) determines the turned-on duration according to the difference between the second temperature value and the second current temperature of the heating member (170) and updates the turned-on duration, the processor (160) executes the following operations:
the processor (160) obtains a heating duration relationship; wherein the heating duration relationship is provided with a plurality of numerical intervals non-overlapping with each other, and each of the plurality of numerical intervals corresponds to a heating duration value; and
the processor (160) updates the turned-on duration to a heating duration value corresponding to a target numerical interval among the plurality of numerical intervals; wherein the target numerical interval is a numerical interval into which the difference between the second temperature value and the second current temperature of the heating member (170) falls.

9. The smoke-filled bubble machine (100) of claim 1, wherein when the temperature of the heating member (170) is greater than or equal to a third predetermined threshold, the processor (160) controls the loop switch (181) to be turned off for a predetermined cooling duration;
the third predetermined threshold is greater than the second predetermined threshold.

10. A smoke-filled bubble machine (100), comprising:
a processor (160);
a memory, electrically connected to the processor (160);
a heating member (170), configured to heat smoke fluid flowing through the heating member (170);
a power supply circuit (180), configured to supply power to the heating member (170), and arranged with a loop switch (181) electrically connected to the processor (160), wherein the loop switch (181) is turned on and turned off under a control of the processor (160); and
a temperature detection circuit (190), electrically connected to the processor (160), and configured to detect a temperature of the heating member (170);
wherein the processor (160) is configured to obtain a temperature electrical signal from the temperature detection circuit (190) to determine the temperature of the heating member (170); the temperature electrical signal is generated when the temperature detection circuit (190) detects the temperature of the heating member (170);
when the processor (160) reads an executable program stored in the memory, the processor (160) executes the following operations:
the processor (160) obtains the temperature electrical signal and determines the temperature of the heating member (170), and determines a relationship between the temperature of the heating member (170) and a first predetermined threshold and a relationship between the temperature of the heating member (170) and a second predetermined threshold, wherein the first predetermined threshold is less than the second predetermined threshold, and the second predetermined threshold is close to an optimal temperature value when the smoke fluid is burning;
when the processor (160) determines that the temperature of the heating member (170) is lower than the first predetermined threshold, the processor (160) controls the loop switch (181) to be turned on to heat the heating member (170);
when the processor (160) determines that the temperature of the heating member (170) is greater than or equal to the first predetermined threshold and lower than the second predetermined threshold, the processor (160) controls the loop switch (181) to be alternately turned off and turned on; wherein the processor (160) adjusts a turned-on duration of the loop switch (181) each time according to a temperature change of the heating member (170) during a last time when the loop switch (181) was turned off; and
when the processor (160) determines that the temperature of the heating member (170) is greater than or equal to the second predetermined threshold, the processor (160) controls the loop switch (181) to be turned on and turned off according to a predetermined PWM signal.

11. The smoke-filled bubble machine (100) of claim 10, wherein when the processor (160) controls the loop switch (181) to be alternately turned off and turned on, the processor (160) cyclically executes the following operations:
the processor (160) controls the loop switch (181) to be turned off and records a first current temperature of the heating member (170) as a second temperature value;
after a predetermined turned-off duration, the processor (160) determines a difference between the second current temperature of the heating member (170) and the second temperature value and updates the turned-on duration; and
the processor (160) controls the loop switch (181) to be turned on for the updated turned-on duration.

12. The smoke-filled bubble machine (100) of claim 11, wherein when the processor (160) determines the difference between the second current temperature of the heating member (170) and the second temperature value and updates the turned-on duration, the processor (160) executes the following operations:
when the processor (160) determines that the second current temperature of the heating member (170) is greater than or equal to the second temperature value, the processor (160) updates the turned-on duration to a first predetermined value;
when the processor (160) determines that the second current temperature of the heating member (170) is less than the second temperature value, the processor (160) determines the turned-on duration according to a difference between the second temperature value and the second current temperature of the heating member (170) and updates the turned-on duration; wherein the difference between the second temperature value and the second current temperature of the heating member (170) is positively correlated with the turned-on duration.

13. The smoke-filled bubble machine (100) of claim 12, wherein when the processor (160) determines the turned-on duration according to the difference between the second temperature value and the second current temperature of the heating member (170) and updates the turned-on duration, the processor (160) executes the following operations:
the processor (160) obtains a heating duration relationship; wherein the heating duration relationship is provided with a plurality of numerical intervals non-overlapping with each other, and each of the plurality of numerical intervals corresponds to a heating duration value; and
the processor (160) updates the turned-on duration to a heating duration value corresponding to a target numerical interval among the plurality of numerical intervals; wherein the target numerical interval is a numerical interval into which the difference between the second temperature value and the second current temperature of the heating member (170) falls.

14. A constant-temperature control circuit (300), comprising:
a main control circuit;
a power supply circuit (180), configured to supply power to a heating member (170), wherein the heating member (170) is configured to heat smoke fluid flowing through the heating member (170); the power supply circuit (180) is arranged with a loop switch (181) connected to the main control circuit, and the loop switch (181) is turned on and turned off under a control of the main control circuit; and
a temperature detection circuit (190), electrically connected to the main control circuit, and is configured to detect a temperature of the heating member (170);
wherein the main control circuit is configured to obtain a temperature electrical signal from the temperature detection circuit (190) to determine the temperature of the heating member (170); the temperature electrical signal is generated when the temperature detection circuit (190) detects the temperature of the heating member (170);
when the temperature of the heating member (170) is lower than a first predetermined threshold, the main control circuit controls the loop switch (181) to be turned on to heat the heating member (170);
when the temperature of the heating member (170) is greater than or equal to the first predetermined threshold and lower than a second predetermined threshold, the main control circuit controls the loop switch (181) to be alternately turned off and turned on; a turned-on duration of the loop switch (181) each time is adjusted according to a temperature change of the heating member (170) during a last time when the loop switch (181) was turned off; the second predetermined threshold is close to an optimal temperature value when the smoke fluid is burning;
when the temperature of the heating member (170) is greater than or equal to the second predetermined threshold, the main control circuit controls the loop switch (181) to be turned off and turned on according to a predetermined PWM signal.

15. The constant-temperature control circuit (300) of claim 14, wherein the temperature detection circuit (190) comprises a thermal sensing element (341) and a signal amplification circuit (342);
the thermal sensing element (341) has a heat conduction relationship with the heating member (170), and is configured to generate a temperature electrical signal according to the temperature of the heating member (170);
the signal amplification circuit (342) is electrically connected between the thermal sensing element (341) and the main control circuit, and is configured to amplify the temperature electrical signal generated by the thermal sensing element (341) and send the amplified temperature electrical signal to the main control circuit.
